# EUROPÄISCHE PATENTANMELDUNG

(11) **EP 0 954 134 A2**
(43) Veröffentlichungstag der Anmeldung: **03.11.1999**
(21) Anmeldenummer: 99108159.7
(22) Anmeldetag: 26.04.1999
(51) Int. Cl.: H04L 7/033, H04L 25/49

(54) **Verfahren und Anordnung zur Rückgewinnung eines Taktsignals aus einem kodierten Datensignal**

(30) Priorität: 30.04.1998 DE 19819593
(71) Anmelder: SIEMENS AKTIENGESELLSCHAFT, 80333 München (DE)
(72) Erfinder: Gardijan, Zoran, 81739 München (DE); Steib, Gerhard, 81545 München (DE); Dauerer, Jörg, 82194 Gröbenzell (DE)

(57) **Zusammenfassung**

Erfindungsgemäß wird bei dem Verfahren und der Anordnung zur Rückgewinnung eines Taktsignals aus einem kodierten Datensignal bei jedem von einer Detektionseinrichtung detektierten binären Zustandswechsel des Datensignals zumindest ein Impuls erzeugt. Durch den erzeugten Impuls wird eine Durchschalteinrichtung zum Durchschalten weiterer Impulse geschlossen, wobei die Durchschalteinrichtung nach einer vorgegebenen Zeit wieder geöffnet wird, und aus den bei jeweils geöffneter Durchschalteinrichtung durchgeschalteten Impulsen das Taktsignal in einem Taktgenerator generiert.

## Beschreibung

Die Erfindung betrifft ein Verfahren und eine Anordnung zur Rückgewinnung eines Taktsignals aus einem kodierten Datensignal. Das Verfahren und die Anordnung sind insbesondere für den Einsatz in Basisstationen von Funk-Kommunikationssystemen, insbesondere von Mobilfunksystemen oder Access-Network-Systemen, vorgesehen.

In Funk-Kommunikationssystemen werden Informationen wie beispielsweise Sprache, Bildinformationen oder andere Daten, mit Hilfe von elektromagnetischen Wellen über eine Funkschnittstelle zwischen einer sendenden und einer empfangenden Funkstation, wie beispielsweise einer Basisstation bzw. Funkstation, übertragen. Das Abstrahlen der elektromagnetischen Wellen erfolgt dabei mit Trägerfrequenzen, die in dem für das jeweilige System vorgesehenen Frequenzband liegen. Beim GSM (Global System for Mobile Communication) liegen die Trägerfrequenzen im Bereich von 900 MHz, 1800 MHz und 1900 MHz. Für zukünftige Mobilfunksysteme mit CDMA- oder TD/CDMA- Übertragungsverfahren über die Funkschnittstelle, wie beispielsweise das UMTS (Universal Mobile Telecommunication System) oder andere Systeme der 3. Generation sind Frequenzen im Frequenzband von ca. 2000 MHz vorgesehen.

In den Basisstationen eines Funk-Kommunikationssystems nach dem Stand der Technik wird ein Taktsignal für die Erzeugung der hochfrequenten Trägerfrequenzen durch einen hochgenauen Ofenquarz, der in einer Zentraleinheit der Basisstation verwirklicht ist, erzeugt und über spezielle Zuleitungen zu den einzelnen Baugruppen, in denen die hochfrequenten Trägerfrequenzen generiert werden, übertragen. Bei einer derartigen parallelen Zuführung der Datensignale und des Taktsignals muß auf eine gleiche Länge der Zuführungen, die einen direkten Einfluß auf die Laufzeiten der jeweiligen Signale besitzt, geachtet werden.

Um eine parallele Zuführung der Datensignale und des Taktsignals zu umgehen, besteht die Möglichkeit, einen Ofenquarz in jeder Baugruppe der Basisstation zu verwirklichen, welches allerdings zu einer wesentlichen Kostenerhöhung führt.

Weiterhin besteht die Möglichkeit, ein Taktsignal aus dem Datensignal abzuleiten, wodurch von einer zusätzlichen Taktzuführung abgesehen werden kann. Hierfür werden nach dem Stand der Technik digitale Taktrückgewinnungs-Schaltungen eingesetzt. Ein Beispiel hierfür ist die Taktrückgewinnung bei der PCM-Übertragung, wie sie ebenfalls für die Erzeugung der Trägerfrequenzen in den Basisstationen nach dem Stand der Technik verwendet wird. Hierbei wird die Anbindung des Funk-Kommunikationssystems an das Festnetz genutzt. Um diesen PCM-Takt für diesen Zweck verwenden zu können, bedarf es jedoch einer sehr aufwendigen Filterung. Zudem besitzen die Taktrückgewinnungs-Schaltungen, die auf dem Prinzip eines stufenweisen Phasenschiebens des Datensignals basieren, den Nachteil, daß durch das stufenweise Phasenschieben und der dadurch generierten Phasensprünge ein Jitter auftritt und die Frequenzstabiltät des zurückgewonnenen Taktes für die Erzeugung der Trägersignale nicht ausreichend ist.

Der Erfindung liegt die Aufgabe zugrunde, ein Verfahren und eine Anordnung anzugeben, die eine Rückgewinnung eines hochgenauen Taktsignals aus einem Datensignal ermöglichen. Diese Aufgabe wird durch das Verfahren nach Patentanspruch 1 und durch die Anordnung nach Patentanspruch 5 gelöst. Vorteilhafte Weiterbildungen der Erfindung sind den abhängigen Patentansprüchen zu entnehmen.

Erfindungsgemäß ist bei dem Verfahren zur Rückgewinnung eines Taktsignals aus einem kodierten Datensignal nach dem unabhängigen Patentanspruch 1 das Datensignal bei einer senderseitigen Kodierung durch zumindest einen binären Zustandswechsel für jedes Datum gekennzeichnet. Bei jedem von einer Detektionseinrichtung detektierten binären Zustandswechsel des Datensignals wird zumindest ein Impuls erzeugt. Durch den erzeugten Impuls wird daraufhin eine Durchschalteinrichtung zum Durchschalten weiterer Impulse geschlossen, wobei die Durchschalteinrichtung nach einer vorgegebenen Zeit wieder geöffnet wird. Schließlich wird aus den bei jeweils geöffneter Durchschalteinrichtung durchgeschalteten Impulsen das Taktsignal in einem Taktgenerator generiert.

Die erfindungsgemäße Anordnung nach dem nebengeordneten Patentanspruch 5 beansprucht die vorangehend beschriebenen Merkmale zur Durchführung des Verfahrens gemäß unabhängigem Patentanspruch 1.

Das erfindungsgemäße Verfahren und die erfindungsgemäße Anordnung ermöglichen vorteilhaft eine sehr genaue Rückgewinnung des Taktsignals. Basierend auf der Tatsache, daß das Datensignal mit Hilfe eines hochgenauen Taktes generiert wurde und jedes Datum des Datensignals durch zumindest einen binären Zustandswechsel, wie er beispielsweise gemäß einer zweiten vorteilhaften Weiterbildung des erfindungsgemäßen Verfahrens durch eine Manchester-Kodierung sichergestellt wird, gekennzeichnet ist, wird durch das Verfahren für jedes Datum jeweils zumindest ein Impuls erzeugt. Weitere Impulse, die durch zusätzliche Zustandsänderungen, beispielsweise bei einer Änderung des binären Wertes von jeweils zwei aufeinanderfolgenden Daten, von der Detektionseinrichtung erzeugt werden, können die geschlossene Durchschalteeinrichtung nicht passieren. Die vorgegebene Zeit, in der die Durchschalteinrichtung geschlossen ist, ist vorteilhaft so zu wählen, daß nur Impulse, die in bestimmten Zeiträumen bzw. zu bestimmten Zeitpunkten erzeugt werden, die Durchschalteinrichtung passieren können. Ist die vorgegebene Zeit, in der die Durchschalteinrichtung geschlossen ist, so gewählt, daß in der verbleibenden Zeit des geöffneten Zustands nur beispielsweise jeweils ein Impuls die Durchschalteeinrichtung passieren kann, so kann der Taktgenerator aus dieser Impulsfolge, die dem hochgenauen Takt bei der Kodierung des Datensignals entspricht, ein hochgenaues Taktsignal beispielsweise für die einleitend beschriebene Erzeugung von Trägerfrequenzen in einem Funk-Kommunikationssystem ableiten.

Gemäß einer ersten Weiterbildung des erfindungsgemäßen Verfahrens und der erfindungsgemäßen Anordnung kann die geschlossene Durchschalteeinrichtung auch durch einen weiteren, aufgrund eines weiteren detektierten binären Zustandswechsels des Datensignals, erzeugten Impuls geöffnet werden. Diese Weiterbildung ermöglicht vorteilhaft, daß bei einer fehlerhaften Detektion eines Zustandswechsels des Datensignals bei geöffneter Durchschalteeinrichtung der darauffolgende Zustandswechsel ein Schließen der Durchschalteeinrichtung bewirkt, so daß auch weiterhin nur die gewünschte Anzahl Impulse für jedes Datum die Durchschalteeinrichtung passieren kann.

Einer weiteren Weiterbildung des erfindungsgemäßen Verfahrens und der erfindungsgemäßen Anordnung zufolge wird in einer zusätzlichen Regeleinrichtung ein Regelsignal aus einer Zeitdifferenz zwischen einer bestimmten Zustandsänderung des durchgeschalteten Impulses und einer bestimmten Zustandsänderung des Taktsignals abgeleitet. Dabei dient das Regelsignal zur Regelung der Phase und/oder der Frequenz des Taktsignals bei der Generierung in dem Taktgenerator. Das zusätzliche Merkmal der Regeleinrichtung ermöglicht vorteilhaft eine sehr genaue Regelung der Phase und/oder der Frequenz des Taktsignals.

Bezugnehmend auf die vorangehend beschriebene Weiterbildung der erfindungsgemäßen Anordnung ist die Regeleinrichtung in einer dritten Weiterbildung als ein Phasendetektor ausgestaltet. Dieser Detektor kann vorteilhaft die Merkmale der ersten Weiterbildung der erfindungsgemäßen Anordnung verwenden, da durch die gesicherte Bereitstellung einer bestimmten Anzahl von durchgeschalteten Impulsen für jedes Datum immer eine entsprechende Phasendifferenz, welche durch die Zeitdifferenz definiert wird, ermittelt und somit die Phase und/oder die Frequenz des Taktsignals sehr genau nachgeführt werden kann. Ein aufgrund einer beispielshaften Störung bei der Detektion fehlender durchgeschalteter Impuls würde durch die sehr groß werdende Phasendifferenz zu einer starken Veränderung der Phase und/oder der Frequenz des Taktsignals durch die Regeleinrichtung führen. Die Variationsmöglichkeit der Phasendifferenz wird durch das Merkmal der ersten Weiterbildung stark eingeschränkt und führt somit zu einer genaueren Rückgewinnung des Taktsignals.

Besonders bevorzugt wird die Anordnung der vorliegenden Erfindung in einer Basisstation eines Funk-Kommunikationssystems eingesetzt. Dadurch wird eine Basisstation bereitgestellt, bei der beispielsweise die Anbindung der Baugruppen für die Erzeugung der Trägerfrequenzen an eine zentrale Baugruppe nur über eine bidirektionelle serielle Verbindung erfolgt, so daß ein Taktsignal für die Generierung der Trägerfrequenzen innerhalb des seriellen Datenstromes übertragen werden kann, ohne daß auf eine hochgenaue Rückgewinnung des zur Trägerfrequenz-Erzeugung erforderlichen Taktsignals verzichtet werden müßte. Es ist daher möglich, daß die Erzeugung des hochgenauen Taktsignals nur auf der zentralen Baugruppe erfolgt. Damit reduzieren sich auch Aufwendungen zur Installation von Taktgebern wie beispielsweise Ofenquarzen, die nur auf der Zentraleinheit implementiert werden müssen. Durch die Verbindung von Baugruppen und Zentraleinheit durch nur jeweils eine Leitung ist weiterhin vorteilhaft eine weitere Absetzbarkeit der Baugruppen von der Zentraleinheit möglich, da keine Laufzeitunterschiede zwischen dem Datensignal und dem Taktsignal auftreten.

Auführungsbeispiele der Erfindung werden anhand der beiliegenden Zeichnungen näher erläutert. Dabei zeigen
- FIG 1: ein Flußdiagramm des erfindungsgemäßen Verfahrens zur Taktrückgewinnung,
- FIG 2: ein Zeitdiagramm des Signalverlaufs entsprechend einem erfindungsgemäßen Verfahren zur Taktrückgewinnung,
- FIG 3: eine schematische Darstellung der Anordnung zur Ausführung des erfindungsgemäßen Verfahrens zur Taktrückgewinnung, und
- FIG 4: eine schematische Darstellung der Anordnung zur Ausführung des erfindungsgemäßen Verfahrens zur Taktrückgewinnung mit einer zusätzlichen Regeleinrichtung.

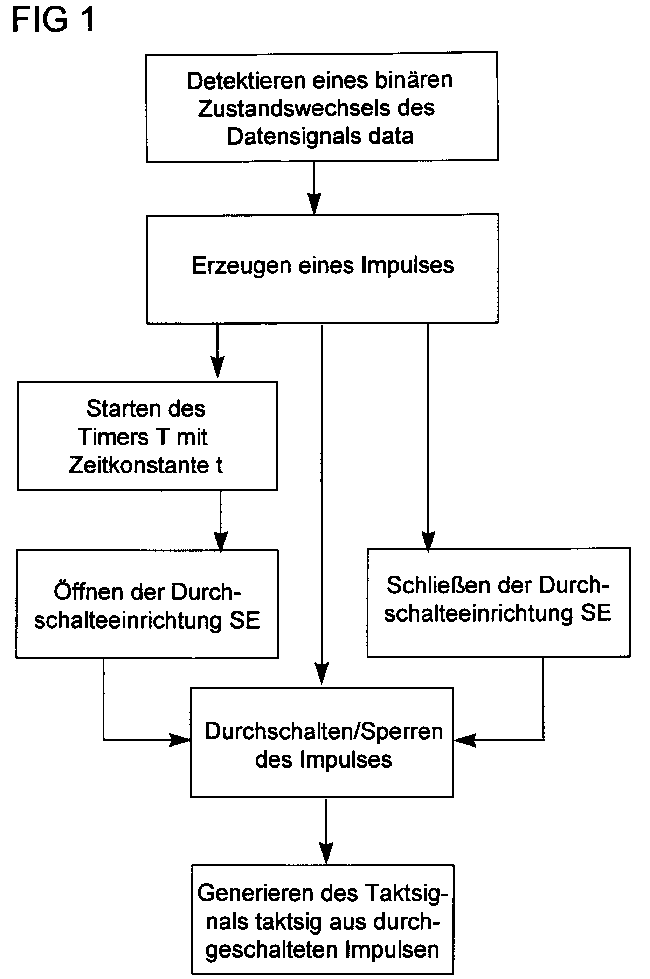

Die FIG 1 zeigt ein beispielhaftes Flußdiagramm des erfindungsgemäßen Verfahrens zur Taktrückgewinnung. In einer Detektionseinrichtung DT wird ein binärer Zustandswechsel des eintreffenden Datensignals data detektiert. Tritt ein binärer Zustandswechsel auf, so erzeugt die Detektionseinrichtung DT einen Impuls einer bestimmten Länge. Durch einen bestimmten Zustandswechsel des Impulses, beispielsweise die negative Flanke, wird ein Turner T mit einer Zeitkonstante t gestartet, wobei die Zeitkonstante t abhängig von der Datenrate des eintreffenden Datensignals data gewählt wird. Parallel dazu wird der Impuls durch eine Durchschalteeinrichtung SE geschaltet und einem Taktgenerator TG zugeführt. Durch den gleichen bestimmten Zustandswechsel des Impulses wird die Durchschalteeinrichtung SE geschlossen, so daß nachfolgende Impulse aufgrund weiterer binärer Zustandswechsel des Datensignals data diese nicht passieren können. Nach Ablauf der Zeitkonstante t des Timers T wird die Durchschalteeinrichtung SE wieder geöffnet und ein weiterer Impuls kann die Durchschalteeinrichtung SE passieren. Aus den durchgeschalteten Impulsen generiert der Taktgenerator TG das Taktsignal taktsig.

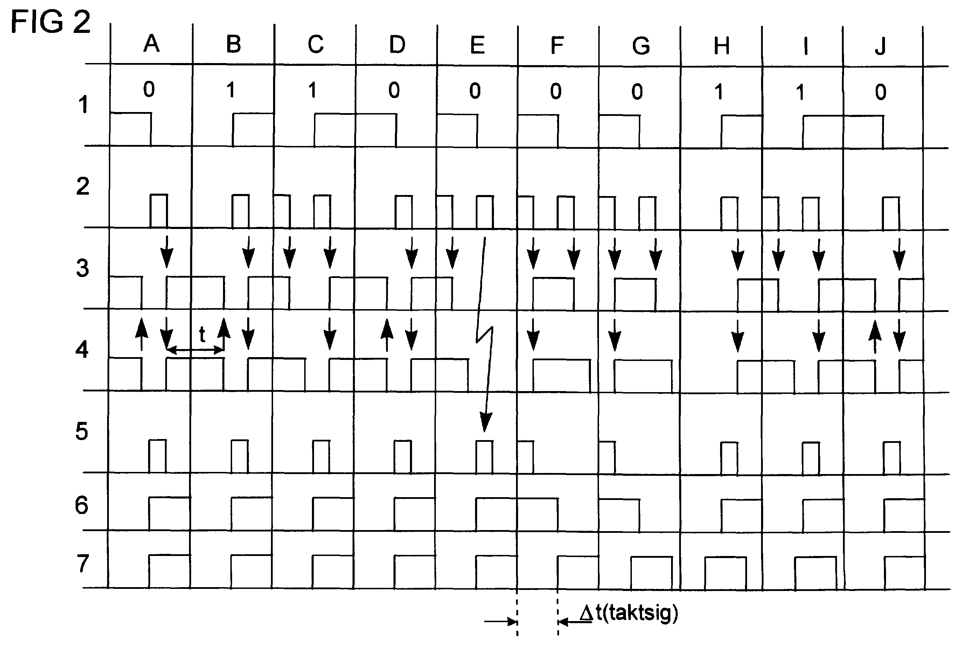

Dieses Verfahren kann in der Weise erweitert werden, daß die Durchschalteeinrichtung SE auch durch einen weiteren binären Zustandswechsel des Datensignals data, noch vor Ablauf der Zeitkonstante t des Timers T, wieder geöffnet werden kann. Die Vorteile dieser Erweiterung des erfindungsgemäßen Verfahrens werden in der FIG 2 dargestellt und im folgenden näher erläutert.

Die FIG 2 zeigt beispielhaft ein Zeitdiagramm des Signalverlaufs bei der Durchführung des erfindungsgemäßen Verfahrens zur Taktrückgewinnung. In den Zeilen des Diagramms sind die verschiedenen Signalverläufe für die Zyklen A bis J dargestellt. Das kodierte Datensignal data in Zeile 1 repräsentiert die darüber angegebene Datenfolge (0, 1, 1, 0, 0, ...), wobei eine 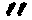 0" durch einen Signalverlauf in der ersten Hälfte eines Zyklus dargestellt wird, während eine 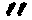 1" in einen Signalverlauf in der zweiten Hälfte des entsprechenden Zyklus kodiert wird. Diese beispielhafte Kodierungsart der Daten entspricht einer Manchester-Kodierung und stellt sicher, daß in Mitte jedes Datums ein Zustandswechsel bzw. ein Wechsel des Signalverlaufs auftritt. Andere Kodierungsarten, bei denen ebenfalls ein gesicherter Zustandswechsel in jedem Datum erfolgt, sind ebenfalls denkbar. Auch ist das Verfahren bei einer Kodierung des Datensignals, bei der beispielsweise nur in jedem fünften Datum ein gesicherter Zustandswechsel auftritt, denkbar, solange das Erscheinen des Zustandswechsels periodisch in regelmäßigen zeitlichen Abständen erfolgt und eine ausreichende Genauigkeit bei der Rückgewinnung des Taktsignals taktsig sichergestellt werden kann.

In der Zeile 2 ist das Signal nach der Detektion der einzelnen Zustandswechsel des kodierten Datensignals data in der Detektionseinrichtung DT dargestellt. Bei jedem von der Detektionseinrichtung DT detektierten Zustandswechsel erzeugt diese einen Impuls einer vorgegebenen Länge. Die Länge des Impulses kann dabei in einem bestimmten Bereich variiert werden, es muß lediglich darauf geachtet werden, daß sich zwei aufeinanderfolgende Impulse nicht überschneiden.

Die Zeile 3 des Zeitdiagramms zeigt die Zustände der Durchschalteeinrichtung SE, wobei ein Signalverlauf einem geschlossenen Zustand entspricht. Die Zeile 4 zeigt die Zustände des Timers T und in der Zeile 5 sind die durchgeschalteten Impulse, wie sie an dem Taktgenerator TG anliegen, dargestellt. Die Zeilen 6 und 7 zeigen schließlich alternative Ergebnisse des rückgewonnenen Taktsignals taktsig am Ausgang des Taktgenerators TG, wobei das Taktsignal taktsig in der Zeile 7 zusätzlich durch eine Regeleinrichtung RG geregelt ist.

Beispielhaft sollen nun die Abhängigkeiten der einzelnen Signale der Zeilen 1 bis 7 anhand der Zyklen A bis J erläutert werden.

Der Zustandswechsel innerhalb des kodierten Datensignals data in der Mitte des Zyklus A bewirkt in der Detektionseinrichtung DT, daß ein Impuls (Zeile 2) erzeugt wird. Da zu dem Zeitpunkt des Auftretens des Impulses die Durchschalteeinrichtung SE geöffnet ist (Zeile 3), wird der Impuls direkt durchgeschaltet (Zeile 5) und liegt an dem Signaleingang des Taktgenerators TG an, der das Taktsignal taktsig generiert (Zeile 6 bzw. 7) Die fallende Flanke des Impulses führt dazu, daß die Durchschalteeinrichtung SE geschlossen wird (Zeile 3) und der Timer T gestartet wird (Zeile 4). Diese Abhängigkeit ist durch die Pfeile zwischen den einzelnen Zeilen dargestellt.

Nach Ablauf der Zeitkonstante t des Timers T bewirkt die fallende Flanke des Timersignals (Zeile 4) das Öffnen der Durchschalteeinrichtung SE, so daß der durch den binären Zustandswechsel des kodierten Datensignals data erzeugte Impuls in dem Zyklus B wiederum die Durchschalteeinrichtung SE passieren kann und an dem Signaleingang des Taktgenerators TG anliegt (Zeile 5).

Da das kodierte Datensignal data in den Zyklen B und C beispielhaft den gleichen binären Wert 1 besitzt, kommt es in dem Zyklus C durch die Zustandswechsel am Beginn und in der Mitte zu der Erzeugung von zwei Impulsen durch die Detektionseinrichtung DT. Das Durchschalten des ersten Impulses in dem Zyklus C wird durch die von der fallenden Flanke des Impulses in dem Zyklus B geschlossenen Durchschalteeinrichtung SE verhindert. Die fallende Flanke des ersten Impulses in dem Zyklus C bewirkt jedoch, das die Durchschalteeinrichtung SE wieder geöffnet wird, so daß der zweite erzeugte Impuls die Durchschalteeinrichtung SE passieren kann. Auf diese Weise wird eine Position der durchgeschalteten Impulse (Zeile 5) in den Zyklen A bis D genau in der Mitte des jeweiligen Zyklus garantiert. Aufgrund der Phasengenauigkeit und der Frequenzstabilität ist die Folge der durchgeschalteten Impulse für die nachgeschaltete Generierung des Taktsignals taktsig in dem Taktgenerator TG sehr gut geeignet.

Die Fehlertoleranz dieses Verfahrens ist in den Zyklen E bis J aufgezeigt. Ein beispielhafter Fehler bei der Detektion des Zustandswechsels, durch einen Blitz gekennzeichnet, führt in dem Zyklus E zu einem direkten Durchschalten des zweiten Impulses, da die Durchschalteeinrichtung SE geöffnet ist. Durch die fallende Flanke des zweiten Impulses wird jedoch fehlerhaft nicht die Durchschalteeinrichtung SE geschlossen und der Timer T aktiviert. Dieses hat zur Folge, daß der erzeugte erste Impuls in dem Zyklus F ebenfalls durchgeschaltet wird, obwohl seine Phasenlage nicht mit der gewünschten Phasenlage, die der Mitte eines jeweiligen Zyklus entspricht, übereinstimmt. Die fallende Flanke des ersten Impulses in dem Zyklus F bewirkt nachfolgend das Schließen der Durchschalteeinrichtung SE und das Aktivieren des Timers T, wodurch ein Durchschalten des zweiten Impulses verhindert wird.

Bei dem nächsten Wechsel des binären Wertes des Datensignals data, wie er beispielhaft zwischen den Zyklen G ( 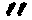 0") und H ( 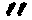 1") auftritt, kommt es wiederum zu einer phasenrichtigen Durchschaltung des Impulses, der aufgrund des Zustandswechsels in der Mitte des Datums des Zyklus H erzeugt wird. Das Verfahren korrigiert sich also vorteilhaft bei einem Auftreten von Aussetzern von selbst, so daß die richtige Phasenlage garantiert wird.

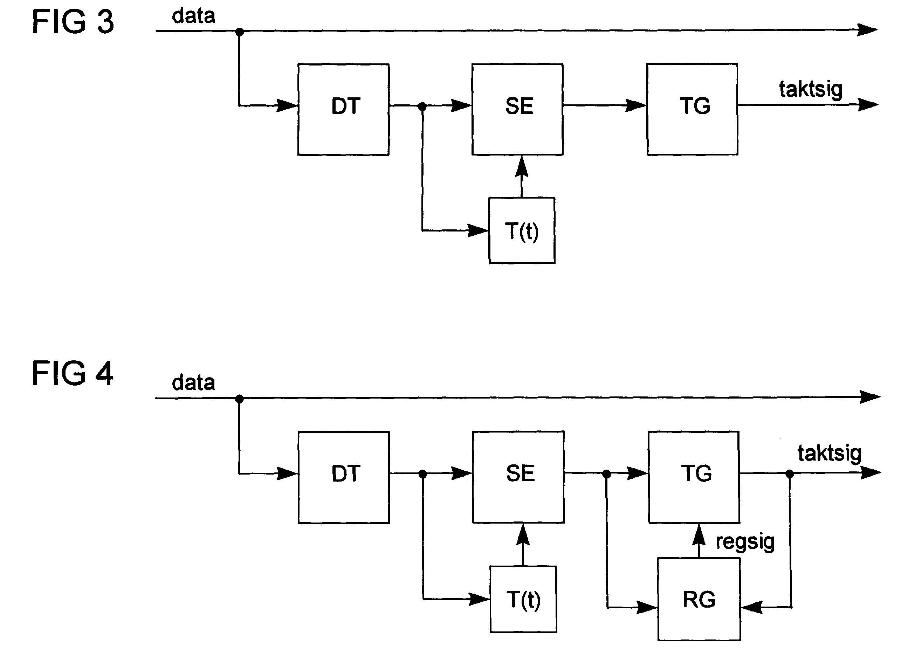

In FIG 3 ist eine schematische Darstellung der Anordnung zur Ausführung des erfindungsgemäßen Verfahrens zur Taktrückgewinnung dargestellt, wie sie beispielsweise in einer Basisstation eines Funk-Kommunikationssystems eingesetzt werden kann. Auf einer Zuleitung, beispielsweise zwischen einer Zentraleinheit und einer Baugruppe in einer Basisstation eines Funk-Kommunikationssystems, wird das Datensignal data übertragen. An eine Detektionseinrichtung DT wird ein aus dem Datensignal data ausgekoppeltes Signal angelegt. Die Detektionseinrichtung DT detektiert wie vorangehend beschrieben jeweils die Zustandswechsel des kodierten Datensignals data und erzeugt bei jedem detektierten Zustandswechsel einen Impuls.

Der jeweils erzeugte Impuls wird nachfolgend zu einer Durchschalteeinrichtung SE übertragen, die den Impuls in geöffnetem Zustand durchschaltet. Die fallende Flanke des Impulses sorgt dafür, daß die Durchschalteeinrichtung SE geschlossen wird, wodurch nachfolgende Impulse nicht durchgeschaltet werden. Parallel dazu wird der in der Detektionseinrichtung DT erzeugte Impuls dazu verwendet, einen Timer T mit einer vorgegebenen Zeitkonstante t zu starten. Nach Ablauf der Zeit t steuert der Timer T die Durchschalteeinrichtung SE an und sorgt hierdurch dafür, daß diese wieder geöffnet wird. Der durchgeschaltete Impuls wird an einen Eingang eines nachgeschalteten Taktgenerators TG angelegt. Der Taktgenerator TG generiert aus den anliegenden Impulsen das Taktsignal taktsig. Dieses Taktsignal taktsig besitzt eine sehr hohe Genauigkeit bezüglich der Phase und der Frequenz und kann somit vorteilhaft beispielsweise für die in der Beschreibungseinleitung beschriebene Erzeugung der Trägerfrequenzen in den einzelnen Baugruppen der Basisstation verwendet werden.

Die FIG 4 zeigt die Anordnung der FIG 3, die um eine Regeleinrichtung RG erweitert ist. Diese Regeleinrichtung RG ermittelt die zeitliche Differenz Δt(taktsig) beispielsweise zwischen der steigenden Flanke des durchgeschalteten Impulses und der steigenden Flanke des in dem Taktgenerator TG generierten Taktsignals taktsig, wie sie in den Zeilen 5 und 6 bzw. 7 des Zeitdiagramm der FIG 2 angegeben ist. Aus dieser Differenz leitet die Regeleinrichtung RG ein Regelsignal regsig ab, das an einen Steuereingang des Taktgenerators TG angelegt wird. Hierdurch kann die Phasenlage des rückgewonnenen Taktsignals taktsig in Bezug auf die Phasenlage des erzeugten Impulses, der dem zur Erzeugung des Datensignals zugrundeliegendem Taktsignal entspricht, genauestens abgestimmt werden. Weiterhin kann durch diese Regelung die Frequenz des Taktsignals taktsig sehr genau geregelt werden.

Die Regeleinrichtung RG kann beispielsweise als ein Phasendetektor bzw. PLL-Schaltkreis ausgestaltet sein, mit dessen Hilfe eine sehr genaue Übereinstimmung der Phasenlagen erzielt werden kann. Die in der FIG 2 in den Zyklen F bis I auftretenden Zeitdifferenzen Δt(taktsig) führen abhängig davon, wie die Regelkonstanten des PLL-Schaltkreises dimensioniert sind, zu einer Korrektur der Phasenlage des Taktsignals taktsig. Diese Korrektur wird in der Zeile 7 der FIG 2 verdeutlicht. Anstatt einer direkten Anpassung des Taktsignals taktsig an die durchgeschalteten Impulse, wie es in der Zeile 6 dargestellt ist, erfolgt ein nur relativ langsames Nachregeln der Phaselage des Taktsignals taktsig in Bezug auf die Phasenlage des durchgeschalteten Impulses. Dadurch bewirkt der fehlerhaft durchgeschaltete Impuls am Beginn des Zyklus F aufgrund der plötzlich auftretenden großen Zeitdifferenz Δt(taktsig) zwischen den steigenden Flanken des Impulses und des generierten Taktsignals ein Nachregeln der Lage des Taktsignals taktsig um einen bestimmten Betrag in dem nachfolgenden Zyklus G. Da in dem Zyklus G wiederum eine Zeitdifferenz Δt(taktsig) auftritt, wird die Lage des Taktsignals taktsig in dem Zyklus H nochmals um einen bestimmten Betrag nachgeregelt, wobei der Betrag der Nachregelung der Lage des Taktsignals taktsig auch beispielsweise proportional zu dem Betrag der Zeitdifferenz Δt(taktsig) gewählt werden kann.

Durch die korrekte Detektion und Durchschaltung des Impulses in dem Zyklus H tritt nun eine negative Zeitdifferenz Δt(taktsig) auf, woraufhin die Regeleinrichtung RG durch das Regelsignal regsig den Taktgenerator in der Weise ansteuert, daß die Lage des Taktsignals taktsig in dem nachfolgenden Zyklus I in Richtung der Ursprungslage vor dem Auftreten des Fehlers in dem Zyklus E korregiert wird, und schließlich eine genaue Zeit- bzw. Phasenübereinstimmung der steigenden Flanken des durchgeschalteten Impulses und des Taktsignals taktsig in dem Zyklus J wieder vorliegt.

## Patentansprüche

1. Verfahren zur Rückgewinnung eines Taktsignals (taktsig) aus einem kodierten Datensignal (data), das bei einer senderseitigen Kodierung durch zumindest einen binären Zustandswechsel für jedes Datum gekennzeichnet ist, bei dem
- bei jedem von einer Detektionseinrichtung (DT) detektierten binären Zustandswechsel des Datensignals (data) zumindest ein Impuls erzeugt wird,
- durch den erzeugten Impuls eine Durchschalteinrichtung (SE) zum Durchschalten weiterer Impulse geschlossen wird, wobei die Durchschalteinrichtung (SE) nach einer vorgegebenen Zeit (t) wieder geöffnet wird, und
- aus den bei jeweils geöffneter Durchschalteinrichtung (SE) durchgeschalteten Impulsen das Taktsignal (taktsig) in einem Taktgenerator (TG) generiert wird.

2. Verfahren nach Anspruch 1,
wobei die Durchschalteinrichtung (SE) ebenfalls durch einen weiteren detektierten binären Zustandswechsel des Datensignals (data) vor Ablauf der vorgegebenen Zeit (t) geöffnet werden kann.

3. Verfahren nach Anspruch 1 oder 2, bei dem
die Kodierung des Datensignals (data) nach einer Manchester-Kodierung erfolgt

4. Verfahren nach einem der Ansprüche 1 bis 3, bei dem
aus einer Zeitdifferenz (Δt(taktsig)) zwischen einem bestimmten Zustandswechsel der durchgeschalteten Impulse und einem bestimmten Zustandswechsel des Taktsignals (taktsig) in einer zusätzlichen Regeleinrichtung (RG) ein Regelsignal (regsig) abgeleitet wird, durch welches die Phase und/oder Frequenz des Taktsignals (taktsig) geregelt wird.

5. Anordnung zur Rückgewinnung eines Taktsignals (taktsig) aus einem kodierten Datensignal (data), das bei einer senderseitigen Kodierung durch zumindest einen binären Zustandswechsel für jedes Datum gekennzeichnet ist, die
- eine Detektionseinrichtung (DT) zum Detektieren von binären Zustandswechseln des kodierten Datensignals (data) und zum Erzeugen zumindest eines Impulses für jeden detektierten binären Zustandswechsel,
- eine Durchschalteinrichtung (SE) zum Durchschalten von erzeugten Impulsen, wobei die Durchschalteinrichtung (SE) durch einen erzeugten Impuls geschlossen und nach einer vorgegebenen Zeit (t) wieder geöffnet wird, und
- einen Taktgenerator (TG) zum Generieren des Taktsignals (taktsig) aus den bei jeweils geöffneter Durchschalteinrichtung (SE) durchgeschalteten Impulsen,
aufweist.

6. Anordnung nach Anspruch 5, bei der
die geschlossene Durchschalteinrichtung (SE) auch durch einen weiteren erzeugten Impuls aufgrund eines weiteren detektierten binären Zustandswechsels des Datensignals (data) geöffnet werden kann.

7. Anordnung nach Anspruch 5 oder 6, die
eine zusätzliche Regeleinrichtung (RG) zum Ableiten eines Regelsignals (regsig) aus einer Zeitdifferenz (Δt(taktsig)) zwischen einem bestimmten Zustandswechsel der durchgeschalteten Impulse und einem bestimmten Zustandswechsel des Taktsignals (taktsig) aufweist, wobei das Regelsignal (regsig) zur Regelung der Phase und/oder der Frequenz des Taktsignals (taktsig) dient.

8. Anordnung nach Anspruch 7, bei der
die Regeleinrichtung als ein Phasendetektor ausgestaltet ist.

9. Anordnung nach einem der Ansprüche 5 bis 8, die
in einer Basisstation eines Funk-Kommunikationssystems, insbesondere eines Mobilfunksystems oder Access-Network-Systems, eingesetzt wird.
